# EUROPEAN PATENT SPECIFICATION

(11) **EP 2 940 155 B1**
(45) Date of publication and mention of the grant of the patent: **27.12.2017**
(21) Application number: 12890754.0
(22) Date of filing: 28.12.2012
(51) Int. Cl.: C21B 13/00, C21B 11/00, C21C 1/04, C21C 7/064, C21C 7/076, C21C 5/52, C21C 7/04

(54) **APPARATUS AND METHOD FOR PROCESSING MOLTEN IRON**
VORRICHTUNG UND VERFAHREN ZUR VERARBEITUNG VON EISENSCHMELZE
APPAREIL ET PROCÉDÉ DE TRAITEMENT DE FONTE LIQUIDE

(30) Priority: 26.12.2012 KR 20120153378
(43) Date of publication of application: 04.11.2015
(73) Proprietor: Posco, Gyeongsangbuk-do 790-300 (KR)
(72) Inventor: SEO, Jeong Do, Pohang-Si Gyeongsangbuk-do 790-835 (KR); CHOI, Joo, Pohang-Si Gyeongsangbuk-do 791-754 (KR); SHIN, Yong Mog, Pohang-Si Gyeongsangbuk-do 790-835 (KR)
(74) Representative: Zech, Stefan Markus
(86) International application number: PCT/KR2012/011704
(87) International publication number: WO 2014/104437

(56) References cited:
- EP-A1- 2 248 916
- JP-A- H04 198 431
- JP-A- H06 271 922
- JP-A- 2010 111 908
- KR-A- 19980 026 523
- KR-A- 20100 105 794
- KR-A- 20120 023 126
- KR-A- 20120 070 675
- KR-A- 20120 070 675
- US-A- 3 627 293

## Description

### TECHNICAL FIELD

The present disclosure relates to an apparatus and a method for treating molten iron, and more particularly, to an apparatus and a method for treating molten iron by which a copper (Cu) component contained in the molten iron may be easily removed.

### BACKGROUND ART

Molten iron tapped from a blast furnace is generally subjected to a steel-making process, such as a pretreatment process, a converter process, and a secondary refining process, to produce molten steel, and the molten steel is subjected to a continuous casting process to produce a cast strand such as a slab, a bloom, a billet, and a beam blank.

The molten iron tapped from a blast furnace is produced through an iron-making process in which sintered ore formed by sintering iron ore, coke, and the like are charged into the blast furnace and heated. That is, while the molten iron tapped from a blast furnace uses iron ore as an iron source, the cost of iron ore in domestic and foreign steel markets has increased, and the iron ore has not thus been smoothly supplied, so that methods for securing iron sources other than iron ore have been devised.

Recently, among the methods for securing the iron source, methods for recycling ferrous scrap such as scrap metal into molten iron are being actively employed. That is, ferrous scrap may be charged into an electric furnace and melted to produce molten iron, thereby being used for producing a cast strand either in combination with the molten iron tapped from a blast furnace or by replacing the molten iron tapped from a blast furnace.

Unlike the iron ore (or sintered ore), the ferrous scrap includes a variety of components according to the purpose of use, so that molten iron using the ferrous iron as an iron source contains a variety of components. The copper component among the variety of components contained in the molten iron generates defects such as a surface crack in a cast strand during the continuous casting process, and causes hot brittleness such as high temperature brittleness during hot working, thereby acting as a cause of quality degradation of the cast strand.

Conventionally, when the copper component was exposed to the surface of ferrous scrap such as copper coated scrap, the ferrous scrap was selectively used through shredder processing and magnetic separation. However, when the copper component is included in ferrous scrap, the scrap could not be separated even through the sorting, so that molten iron contained the copper component.

The copper component contained in molten iron has weaker oxidative properties than the iron component, so that there was a problem that the copper component contained in molten iron could not be easily removed by oxidation in the conventional steel-making process. Therefore, there was a problem that the quality of a cast strand might be significantly degraded when low-grade raw materials such as ferrous scrap were used as an iron source of molten iron.

### DISCLOSURE OF THE INVENTION

### TECHNICAL PROBLEM

The present disclosure provides an apparatus and a method for treating molten iron by which copper in molten iron may be stably removed.

The present disclosure provides an apparatus and a method for treating molten iron by which the quality of molten steel may be improved.

The present disclosure provides an apparatus and a method for treating molten iron by which resources may be recycled and manufacturing costs may thus be reduced.

### TECHNICAL SOLUTION

An apparatus for treating molten iron according to an embodiment of the present disclosure, is characterized by including a melting furnace melting an iron source to produce molten iron, and a decoppering device removing a copper component contained in the molten iron by spraying the molten iron produced in the melting furnace in the form of droplets.

The melting furnace may be at least any one of an electric furnace, a submerged arc furnace (SAF), or a ladle furnace (LF).

The decoppering device includes a first container accommodating the molten iron, and a second container accommodating flux therein and disposed under the first container, wherein the first container may be formed to spray the molten iron to the second container in the form of droplets.

An outlet for discharging the molten iron is formed at the bottom of the second container, and a third container accommodating the molten iron discharged from the second container may be further disposed under the second container.

The first container includes at the bottom thereof, a spraying unit spraying the molten iron in the form of droplets, and the spraying unit may be formed of a plurality of spray holes or a porous member.

The spray hole may be formed with a size of 2 to 5 mm.

An opening and closing unit for opening and closing the spraying unit may be included.

A method for treating molten iron according to an embodiment of the present disclosure is for treating impurities contained in molten iron, wherein the method is characterized by including producing molten iron by melting an iron source containing copper, charging the molten iron into a first container, preparing flux in a second container disposed under the first container, and spraying the molten iron prepared in the first container to the second container in the form of droplets and making the molten iron react with the flux to remove copper contained in the molten iron.

During the producing of the molten iron, at least any one of ferrous scrap, rebar, FINEX sludge, copper slag, waste tires (tire cords), or iron sand may be used as the iron source.

The flux may include at least a Na₂CO₃-containing material and an S-containing material.

The composition ratio of the Na₂CO₃-containing material to the S-containing material may be 20-60 wt% : 40-80 wt%.

The Na₂CO₃-containing material may be Na₂CO₃ or trona (Na₂CO₃•NaHCO₃•2H₂O), and the S-containing material may be at least any one of Na₂S, Na₂SO₄, or FeS.

The flux may be prepared in an amount of 150 kg to 4,000 kg per one ton of the molten iron.

The method is characterized in that the flux has a specific gravity lower than that of the molten iron, and the molten iron passes through the flux and sinks to the bottom of the flux.

During the spraying of the molten iron prepared in the first container to the second container in the form of droplets, the interior of the second container may be in a vacuum state so that the molten iron introduced from the first container may be spread.

During the spraying of the molten iron prepared in the first container to the second container in the form of droplets, pressure may be applied to the interior of the first container so that the molten iron in the first container may be sprayed to the second container in the form of droplets.

A desulfurizing treatment is performed after the removing of the copper contained in the molten iron.

The desulfurizing treatment includes preparing a third container under the second container, preparing desulfurizing flux in the third container, and providing the molten iron accommodated in the second container to the third container in the form of molten iron flow and making the molten iron react with the flux to remove sulfur contained in the molten iron, wherein the desulfurizing treatment is performed consecutively with the removing of the copper.

The desulfurizing flux may include trona.

### ADVANTAGEOUS EFFECTS

Using the apparatus and the method for treating molten iron according to embodiments of the present disclosure, the copper component contained in molten iron may be easily removed. That is, molten iron in the form of droplets improves efficiency for the reaction with flux and may thus effectively remove the copper component contained in molten iron. Accordingly, low-cost iron sources containing copper, such as waste scrap, tire cords, rebar, FINEX sludge, and copper slag, may be utilized. Therefore, unnecessarily wasted resources may be recycled, so that it is possible to control environmental pollution and reduce manufacturing costs of molten iron.

Furthermore, the copper component and the sulfur component in molten iron may be consecutively removed, and it is thus possible to shorten the time required for refining of molten iron. Moreover, loads in desulfurizing operation may also be suppressed by using flux inhibiting sulfur component pick-up into molten iron.

### BRIEF DESCRIPTION OF THE DRAWINGS

FIG. 1 schematically illustrates the configuration of an apparatus for treating molten iron according to an embodiment of the present disclosure.
FIG. 2 illustrates the configuration of a spraying unit.
FIG. 3 illustrates an iron and steel making process progressed according to an embodiment of the present disclosure.
FIG. 4 illustrates an experimental apparatus for testing molten iron by a method for treating molten iron according to an embodiment of the present disclosure.
FIGS. 5 and 6 are graphs showing experimental results of molten iron treated according to an embodiment of the present disclosure.

### MODE FOR CARRYING OUT THE INVENTION

Hereinafter, preferred embodiments of the present disclosure will be described in detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present invention to those skilled in the art.

The present disclosure provides a technique applied to remove impurities, particularly copper (Cu), contained in molten iron during the process for producing molten iron using a variety of low-cost iron sources such as ferrous scrap, rebar, FINEX sludge, copper slag, waste tires, and iron sand. Herein, the FINEX sludge contains about 50 wt% or more of ferrous component (T.Fe), and the copper slag contains about 40 wt% of ferrous component, so the FINEX sludge and the copper slag may be useful as an iron source in producing molten iron.

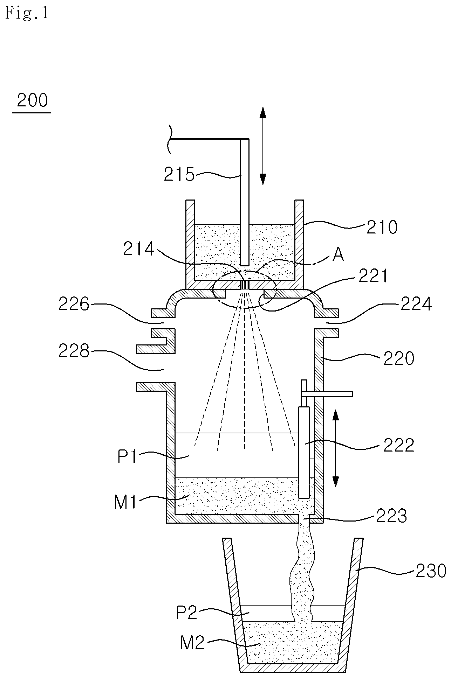

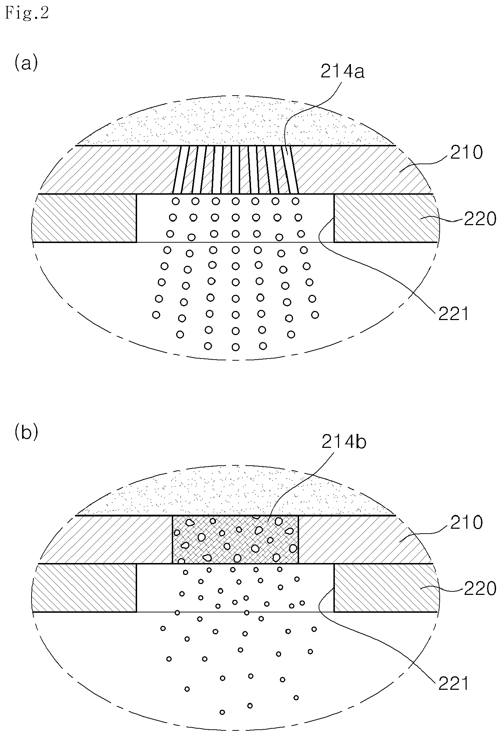

FIG. 1 schematically illustrates the configuration of an apparatus for treating molten iron according to an embodiment of the present disclosure. FIG. 2 illustrates the configuration of a spraying unit.

Molten iron produced by melting low-cost iron sources such as ferrous scrap, rebar, FINEX sludge, copper slag, waste tires, and iron sand in a melting furnace such as an electric furnace, a submerged arc furnace (SAF), and a ladle furnace (LF) contains a variety of impurities such as phosphorus (P), sulfur (S), and copper (Cu) in large amounts. Techniques for removing copper (Cu) of these impurities have not been developed so much. Accordingly, the embodiment of the present disclosure provides a decoppering device removing copper (Cu) contained in molten iron and forms the molten iron into droplets to be in contact with flux P1, thereby being capable of improving decoppering efficiency in the molten iron.

Referring to FIG. 1, the apparatus for treating molten iron, that is the decoppering device, includes a first container 210 in which molten iron M is charged and a second container 220 which is disposed under the first container 210 and performs refining of the molten iron M sprayed from the first container 210.

The first container 210 may be a container such as a ladle capable of accommodating molten iron therein, and may be configured to have an openable and closable top so that the interior thereof is formed into a vacuum state. Furthermore, the first container 210 may include, at the bottom thereof, a spraying unit 214 for spraying the molten iron M accommodated in the first container 210 to the second container 220.

The spraying unit 214 may be formed in a variety of forms so that the molten iron M accommodated in the first container 210 may be sprayed to the second container 220 in the form of droplets.

For example, the spraying unit 214 may be formed of a variety of spraying units 214a at the bottom of the first container 210. The spraying unit 214a may be formed with a size of about 2 to 5 mm. When the size of the spraying unit 214a is less than the above range, it is difficult to spray the molten iron M. On the other hand, when the size is greater than the above range, the size of the droplet increases, and efficiency for the reaction with the flux P1 may thus be reduced.

The spraying units 214a may be formed throughout the bottom of the first container 210, or formed in only certain areas of the central portion of the first container 210. In the latter case, the spraying units 214a may be formed with a slope so that droplets may be sprayed while being radially spread in the second container 220.

Alternatively, the spraying unit 214 may be a porous member 214b installed at the bottom of the upper container. The molten iron M accommodated in the first container 210 may be sprayed to the second container 220 while forming droplets through pores formed in the porous member 214b.

In order to start or stop the spraying of the molten iron M accommodated in the first container 210, an opening and closing unit 215 for opening and closing the spraying unit 214 may be provided. The opening and closing unit 215 may be a stopper installed to move in a vertical direction in the first container 210, or may be a sliding plate installed to move in a horizontal direction at the bottom of the first container 210.

The second container 220 is a smelting furnace performing refining of the molten iron M, accommodates the molten iron M sprayed from the second container 220, and forms a space for accommodating the flux P1 for removing impurities, for example copper, contained in the molten iron M. Furthermore, the second container 220 may include a vent for forming vacuum therein, an inlet for introducing gases to form a predetermined atmosphere therein, an outlet for discharging reaction gases produced by the reaction between the molten iron M and the flux P1, and the like. Furthermore, an opening 221 communicating with the spraying unit 214 of the first container 210 may be formed at the top of the second container 220. It is preferable that the opening 221 is formed with a size corresponding to the spraying unit 214 formed at the bottom of the first container 210 or a larger size than the spraying unit 214 so that the molten iron M may be smoothly sprayed.

Through the above configuration, the molten iron M may be sprayed in the form of droplets to quickly react with the flux P1, thereby effectively removing copper contained in the molten iron M.

Meanwhile, during the removing of copper contained in the molten iron M, other impurities such as a sulfur (S) component contained in the flux P1 may be picked up into the molten iron M1. That is, copper contained in the molten iron M1 has high efficiency for the reaction with sulfur (S), so that the flux P1 used for removing copper contains large amounts of sulfur (S) component. Therefore, sulfur, which did not react with copper during the decoppering process removing copper in the molten iron M1, may be picked up into the molten iron.

Accordingly, a third container 230, in which decoppered molten iron M1 may be charged to perform desulfurization, may be disposed under the second container 220. The third container 230 may be a container, such as a ladle or a smelting furnace, in which a space capable of accommodating molten iron M2, flux P2, and the like is formed. The third container 230 is disposed under the second container 220 and provided with the molten iron M1 discharged from the second container 220, that is the decoppered molten iron M1, and performs desulfurization to obtain molten iron M2 having a target composition.

Accordingly, the second container 220 may include an outlet 223 for providing the molten iron M1 to the third container 230. The outlet 223 may be formed at the bottom or the lower side wall of the second container 220. The outlet 223 may be formed in the form similar to the spraying unit 214 formed in the first container 210 so that the molten iron M1 may be provided to the third container 230 in the form of droplets. Alternatively, the decoppered molten iron M1 may be provided to the third container 230 while forming molten iron flow instead of spraying the molten iron M1 in the form of droplets.

Through the above configuration, copper and sulfur contained in the molten iron may be effectively removed, and, if necessary, decoppering and desulfurization may be consecutively performed to improve process efficiency.

Hereinafter, the method for removing the copper component contained in the molten iron using the apparatus for treating molten iron will be described.

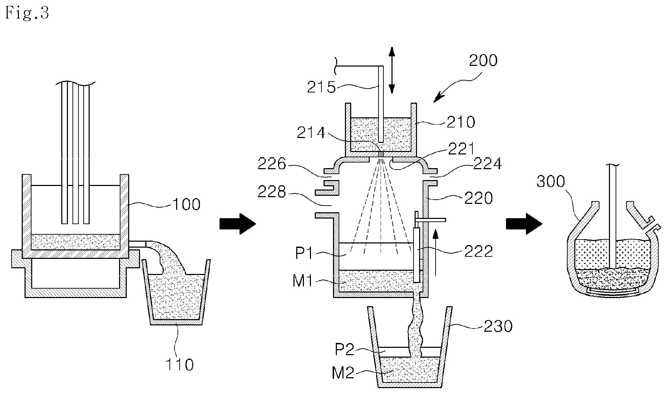

FIG. 3 illustrates an iron and steel making process progressed according to an embodiment of the present disclosure.

First, molten iron M, for example molten iron is prepared. The molten iron M may be produced by melting and reduction of a variety of low-cost iron sources, such as ferrous scrap, rebar, FINEX sludge, copper slag, waste tires (tire cords), and iron sand, in a melting furnace 100. The melting furnace 100 may be an electric furnace, a submerged arc furnace (SAF), or a ladle furnace (LF), and during the production of the molten iron M, coke (or coal), calcium oxide, SiO₂, and the like may be put into the melting furnace 100 to perform reduction and remove a phosphorus (P) component. The molten iron M produced using these low-cost iron sources contains large amounts of copper.

The produced molten iron M is tapped from the melting furnace to a ladle 110, and then transferred to a place for decoppering.

The molten iron M accommodated in the ladle 110 is charged into the first container 210. In this case, the ladle 110 may be used as the first container 210.

Then, the flux P1 for removing copper is prepared in the second container 220 in which decoppering of the molten iron M is performed. It is preferable that the flux P1 is put into the second container 220 before the molten iron M is sprayed into the second container 220. The flux P1 is a material having a specific gravity lower than that of the molten iron M1, and a material including the sulfur (S) component which actively reacts with copper may be used as the flux P1. For example, the flux P1 may include a material containing Na₂CO₃ and a material containing sulfur (S). In this case, the Na₂CO₃-containing material may be Na₂CO₃ or trona (Na₂CO₃•NaHCO₃•2H₂O), and the S-containing material is at least any one of FeS, Na₂S, or Na₂SO₄. The trona includes about 30 wt% of sodium (Na), and depending on the country of origin, includes sulfur (S) which exists in oxide forms such as Na₂SO₄, Na₂CO₃•2Na₂SO₄. Herein, FeS, Na₂S, or Na₂SO₄ may be used as the sulfur-containing material. However, in the case of FeS and Na₂SO₄, large amounts of sulfur component are picked up into the molten iron M1 after decoppering. On the other hand, in the case of Na₂S, the sulfur component pick-up into the molten iron M1 does not substantially occur, and Na₂S is thus more preferable. This is likely because the sodium (Na) component contained in the flux P1 makes a reaction product of copper and sulfur into a stable phase. This will be again discussed through experimental results which will be later described.

It is preferable that the ratio of Na₂CO₃-containing material to sulfur (S)-containing material in the flux P1 is about 20-60 wt% : 40-80 wt%. The ratio of sulfur (S)-containing material is higher than that of the Na₂CO₃-containing material because decoppering efficiency may be thereby higher. When the ratio is less than or greater than the above range, target decoppering efficiency may not be obtained, and it is thus preferable to properly adjust the ratio within the above range.

The molten iron M charged into the first container 210 is sprayed into the second container 220 while forming droplets through the spraying unit 214 formed at the bottom of the first container 210.

The molten iron M may be sprayed in the form of droplets by using a variety methods.

The molten iron M charged into the first container 210 is sprayed to the second container 220 through the spraying unit 214 formed at the bottom of the first container 210, and the spraying unit 214 formed in the first container 210 is formed of the spraying units 214a or the porous member 214b, so that the molten iron M may be sprayed to the second container 220 through the spraying unit 214 due to the weight of its own. In this case, if pressure is applied on the molten iron M accommodated in the first container 210 by providing an inert gas such as an argon gas into the first container 210, the molten iron M may be fast sprayed to the second container 220 while forming droplets. When the molten iron M is sprayed to the second container 220 in the form of droplets, forming vacuum in the second container 220 may allow the molten iron M sprayed to the second container 220 to be evenly spread in the second container 220 due to the pressure difference.

The molten iron M sprayed to the second container 220 in the form of droplets violently reacts with the flux P1 passing through the flux P1. In this case, copper in the molten iron M reacts with the flux P1 to produce by-products, the produced by-products remain in the flux P1, and decoppered molten iron M1 drops to the bottom of the flux P1 due to the difference in specific gravity between the molten iron M1 and the flux P1.

When most of the molten iron M charged into the first container 210 is sprayed to the second container 220, and decoppered through the reaction with the flux P1 in the second container 220, the molten iron M1 accommodated in the second container 220, that is decoppered molten iron M1, is sampled and the composition thereof is analyzed. When it is determined by the analysis result that the molten iron M1 having a target composition is produced, the molten iron M1 in the second container 220 is tapped into a container such as a ladle and is subjected to a subsequent steel-making process such as a dephosphorization process.

However, when it is determined that the molten iron M1 in the second container 220 does not have a target composition, for example when the sulfur component in the flux P1 is picked up into the molten iron M1 during the decoppering process and the sulfur concentration thus increases, desulfurization of the molten iron M1 may be performed.

In the desulfurization, an opening and closing unit 222 installed in the second container 220 is operated to open the outlet 223 formed in the second container 220 and discharge the molten iron M1 in the second container 220 to the third container 230. The molten iron M1 is discharged to the third container 230 while forming molten iron flow and drops to desulfurizing flux P2 put into the third container 230. The sulfur in the molten iron reacts with the desulfurizing flux P2 to produce by-products, the by-products remain in the desulfurizing flux P2, and molten iron M2 drops to the bottom of the desulfurizing flux P2. In this case, a material including trona may be used as the desulfurizing flux P2.

Thereafter, when the desulfurization is completed, the desulfurizing flux P2 (including by-products) in the third container 230 is removed, and the molten iron M1 is tapped into a container such as a ladle and subjected to a subsequent steel-making process 300. In the desulfurization process, sulfur in the molten iron reacts with trona to produce by-products including Na₂S, and the desulfurizing flux P2 (including by-products), which is removed after the desulfurization, may be recycled into flux in a subsequent decoppering process.

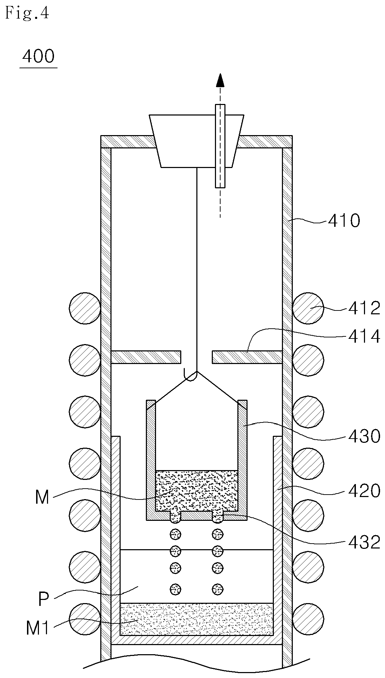

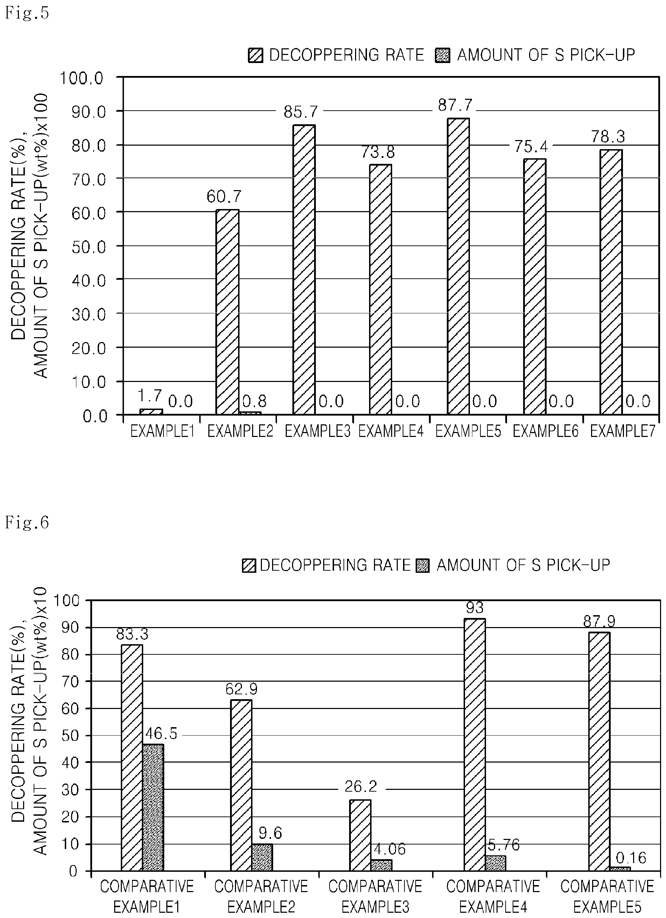

FIG. 4 illustrates an experimental apparatus for testing molten iron by a method for treating molten iron according to an embodiment of the present disclosure. FIGS. 5 and 6 are graphs showing experimental results of molten iron treated according to an embodiment of the present disclosure.

Table 1 below shows compositions of flux used in decoppering and temperatures of molten iron during the decoppering in order to investigate decoppering efficiency.

**Table. 1**

| | Flux Composition | Temperature (°C) |
|---|---|---|
| Example 1 | Trona 91g, Na₂S 15g | 1335 |
| Example 2 | Trona 67g, Na₂S 53g | 1368 |
| Example 3 | Trona 50g, Na₂S 80g | 1338 |
| Example 4 | Trona 25g, Na₂S 80g | 1320 |
| Example 5 | Na₂S 140g | 1460 |
| Example 6 | Trona 50g, Na₂S 80g | 1355 |
| Example 7 | Na₂S 140g | 1349 |
| Comparative Example 1 | Na₂CO₃ 47g, FeS 93g | 1450 |
| Comparative Example 2 | Na₂CO₃ 67g, FeS 33g | 1330 |
| Comparative Example 3 | Na₂CO₃ 91g, FeS 9g | 1396 |

In Examples 1 to 7 and Comparative Examples 1 to 3, molten iron is sprayed in the form of droplets and passed through flux for decoppering, using the experimental apparatus as illustrated in FIG. 4.

In the experimental apparatus 400 illustrated in FIG. 4, a lower crucible 420 was installed in an enclosed chamber 410 (herein, a high-frequency induction melting furnace having induction heating coils was used), and an upper crucible 430 accommodating molten iron M was installed at an upper portion of the enclosed chamber 410. Two spraying holes 432 having a diameter of 3 mm were formed in the upper crucible 430 so that molten iron M accommodated in the upper crucible 430 dropped to the lower crucible 420 while forming droplets. In this case, the molten iron M accommodated in the upper crucible 430 was 60 g, and the experiment was conducted until about 30 g of the molten iron M remained in the upper crucible 430. Repetitive experiments were conducted in such a way that the composition of flux P put into the lower crucible 420 was changed.

At the time the experiment was almost completed, the molten iron M remaining in the upper crucible 430 was sampled, and the flux P and the molten iron M1 in the lower crucible 420 were sampled. Each specimen was then prepared and analyzed to obtain results as shown in Tables 2 and 3 below. Herein, Table 2 shows results in the case where the molten iron was decoppered by flux containing Na₂S, and Table 3 shows results in the case where the molten iron was decoppered by flux containing FeS. FIGS 5 and 6 are graphs plotting decoppering efficiency shown in Tables 2 and 3.

**Table. 2**

| | | Molten Metal Composition (wt%) | | | Flux Composition (wt%) | | | | |
|---|---|---|---|---|---|---|---|---|---|
| | | Cu | S | C | Cu | S | Na | Mg | C |
| Example 1 | Initial | 0.60 | 0.028 | 4.42 | - | - | - | - | - |
| | After Reaction | 0.59 | 0.0074 | 2.38 | 0.0062 | 0.69 | 40.85 | 0.032 | 9.70 |
| Example 2 | Initial | 0.61 | 0.053 | 4.55 | - | - | - | - | - |
| | After Reaction | 0.24 | 0.061 | 2.61 | 0.15 | 11.6 | 43.65 | 0.034 | 6.99 |
| Example3 | Initial | 1.40 | 12.6 | 17.4 | - | - | - | - | - |
| | After Reaction | 0.20 | 0.39 | 2.67 | 0.30 | 17.7 | 45.25 | 0.064 | 4.84 |
| Example4 | Initial | 0.61 | 0.71 | 4.51 | - | - | - | - | - |
| | After Reaction | 0.16 | 0.15 | 2.40 | 0.32 | 21.6 | 46.95 | 0.044 | 3.20 |
| Example5 | Initial | 0.56 | 0.48 | 7.86 | - | - | - | - | - |
| | After Reaction | 0.069 | 0.017 | 2.98 | 0.61 | 20.9 | 43.20 | 0.071 | 0.52 |
| Example6 | Initial | 0.61 | 0.022 | 2.55 | - | - | - | - | - |
| | After Reaction | 0.15 | 0.008 | 2.40 | 0.18 | 18.2 | 44.85 | 0.059 | 4.47 |
| Example 7 | Initial | 0.6 | 0.024 | 4.05 | - | - | - | - | - |
| | After Reaction | 0.13 | 0.0096 | 3.15 | 0.97 | 18.5 | 49.75 | 0.060 | 0.17 |

**Table. 3**

| | | Molten Metal Composition (wt%) | | | Flux Composition (wt%) | | | | |
|---|---|---|---|---|---|---|---|---|---|
| | | Cu | S | C | Cu | S | Na | Mg | C |
| Comparative Example 1 | Initial | 0.06 | - | - | - | - | - | - | - |
| | After Reaction | 0.01 | 4.65 | 0.075 | 0.31 | 22.2 | 16.20 | 0.39 | 0.11 |
| Comparative Example 2 | Initial | 0.62 | 0.021 | 2.33 | - | - | - | - | - |
| | After Reaction | 0.23 | 0.98 | 2.34 | 0.30 | 26.1 | 44.90 | 0.031 | 3.14 |
| Comparative Example 3 | Initial | 0.65 | 0.027 | 5.35 | - | - | - | - | - |
| | After Reaction | 0.48 | 0.48 | 2.06 | 0.14 | 3.93 | 40.35 | 0.045 | 8.28 |

First, seen from Table 2, it can be seen that copper content after decoppering decreases throughout Examples 1 to 7. However, it can be seen that while decoppering efficiency is very low at about 1.7 % in Example 1 where 15 g of Na₂S was used, decoppering efficiency is very high at about 60 % or more in the other Examples where the amount of Na₂S was larger than in Example 1. Accordingly, it can be seen that decoppering efficiency increases as the amount of Na₂S increases. From the decoppering efficiency in Examples 2 to 7, it can be also seen that decoppering efficiency increases when Na₂S content is higher than trona content. Therefore, target decoppering efficiency may be implemented by properly mixing trona (or Na₂CO₃) and Na₂S at the ratio in the aforesaid range.

In Comparative Examples 1 to 3, molten iron was decoppered using FeS instead of Na₂S in flux. Seen from Table 3 and FIG. 6, Comparative Examples 1 to 3 show high decoppering efficiency of about 25 to 80 %. While this decoppering efficiency is included in the range of the decoppering efficiency by the above described Examples (except Example 1) showing relatively high decoppering efficiency, it can be seen that about 4 to 50 wt% of sulfur (S) is picked up in large amounts into the molten metal after decoppering. Particularly, it can be also seen that the pick-up amount of sulfur increases as the amount of FeS increases. By comparison, in Examples 1 to 7, it can be seen that 1 wt% or less of sulfur exists in the molten metal. Particularly, it can be seen that the pick-up amount of sulfur increases as the amount of FeS increases. By comparison, in Examples 1 to 7, it can be also confirmed that sulfur is rarely picked up into molten iron after reaction.

Therefore, it can be seen that using Na₂S as decoppering flux for removing the copper component in molten iron is highly effective in inhibiting the sulfur pick-up as well as decoppering.

Furthermore, an equilibrium reaction experiment was conducted in order to confirm decoppering efficiency obtained by spraying molten iron in the form of droplets.

In the equilibrium reaction experiment, a crucible was installed in an enclosed chamber, 120 g of molten iron containing copper was put into the crucible and heated up to 1,550°C in an argon atmosphere to melt and obtain molten iron, and thereafter temperature was lowered to 1,400°C. At this time, molten iron in the crucible was sampled to prepare an initial specimen. Thereafter, 30 g of Na₂CO₃-FeS based flux (Comparative Example 4) or 30 g of Na₂CO₃-Na₂S based flux (Comparative Example 5) was put into the molten iron, and the molten iron was again sampled after holding for 30 minutes to prepare a specimen after reaction and the composition thereof was analyzed (Equilibrium reaction).

Referring to FIG. 5, seen from the results of composition analysis of specimens, decoppering efficiencies in Comparative Examples 4 and 5 were almost about 90% and similar to each other. However, in Comparative Example 4 where Na₂CO₃-FeS based flux was used, the amount of sulfur component in molten iron after reaction was very high compared with Comparative Example 5, and the sulfur pick-up phenomenon did not substantially occur in Comparative Example 5.

While the results obtained from the equilibrium reaction experiment were similar, in terms of decoppering efficiency and sulfur pick-up phenomenon, to the results obtained from Examples 1 to 7 and Comparative Examples 1 to 3 in which molten iron was sprayed in the form of droplets, the reaction between molten metal and flux was occurred in earnest about five minutes after the flux was put into the molten metal in this experiment.

However, in the case where molten iron was decoppered in the form of droplets (Examples 1 to 7 and Comparative Examples 1 to 3), the reaction between molten iron and flux was violently occurred within a few seconds, for example three seconds, just after the molten iron droplets were in contact with the flux.

According to these experimental results, it was confirmed that decoppering molten iron in the form of droplets as described in the present disclosure allowed for rapid removing of copper in molten iron, and at the same time, could prevent sulfur contained in flux from being picked up into the molten metal by applying S-containing flux such as Na₂S, thereby being capable of producing molten metal having a desired composition.

Although the specific embodiments have been described in the detailed description of the present invention, it should be understood that various modifications can be made without departing from the scope of the present invention. Therefore, the scope of the present invention should not be limited to the described embodiments, but should be determined by the accompanying claims and equivalents thereof.

### INDUSTRIAL APPLICABILITY

The apparatus and the method for treating molten iron according to embodiments of the present disclosure may easily remove the copper component contained in molten iron, and low-cost iron sources containing copper, such as waste scrap, tire cords, rebar, FINEX sludge, and copper slag, may thus be utilized. Therefore, unnecessarily wasted resources may be recycled, so that it is possible to control environmental pollution and reduce manufacturing costs of molten iron.

Furthermore, the copper component and the sulfur component in molten iron may be consecutively removed, and it is thus possible to shorten the time required for refining of molten iron. Moreover, loads in desulfurizing operation may also be suppressed by using flux inhibiting sulfur component pick-up into molten iron.

## Claims

1. An apparatus for treating molten iron, comprising:
a melting furnace melting an iron source to produce molten iron; and
a decoppering device (200) comprising a first container (210) accommodating the molten iron and a second container (220) that accommodates flux therein, that is configured such that the molten iron reacts with it to remove copper contained in the molten iron, and is disposed under the first container; and
a third container (230) disposed under the second container (220) and accommodating the molten iron discharged from the second container (220),
wherein the first container (210) comprises a spraying unit (214) disposed at the bottom of the first container (210) to spray the molten iron in the form of droplets to the second container (220), and an outlet (223) for discharging the molten iron is disposed at the bottom of the second container (220).

2. The apparatus of claim 1, wherein the melting furnace is at least any one of an electric furnace, a submerged arc furnace (SAF), or a ladle furnace (LF).

3. The apparatus of claim 1 or 2, wherein the spraying unit (214) is formed of a plurality of spray holes (214a) or a porous member (214b).

4. The apparatus of claim 3, wherein the spray hole (214a) is formed with a size of 2 to 5 mm.

5. The apparatus of claim 1 or 2, comprising an opening and closing unit (215) for opening and closing the spraying unit (214).

6. A method for treating molten iron, the method for treating impurities contained in molten iron, the method comprising:
producing molten iron by melting an iron source containing copper;
charging the molten iron into a first container (210);
preparing flux in a second container (220) disposed under the first container (210); and
spraying the molten iron prepared in the first container (210) to the second container (220) in the form of droplets and making the molten iron react with the flux to remove copper contained in the molten iron,
wherein the desulfurizing treatment comprises:
preparing a third container (230) under the second container (220);
preparing desulfurizing flux in the third container (230); and
providing the molten iron accommodated in the second container (220) to the third container (230) in the form of molten iron flow and making the molten iron react with the flux to remove sulfur contained in the molten iron,
wherein the desulfurizing treatment is performed consecutively with the removing of the copper.

7. The method of claim 6, wherein during the producing of the molten iron, at least any one of ferrous scrap, rebar, FINEX sludge, copper slag, waste tires (tire cords), or iron sand is used as the iron source.

8. The method of claim 6, wherein the flux comprises at least a Na₂CO₃-containing material and an S-containing material.

9. The method of claim 8, wherein the composition ratio of the Na₂CO₃-containing material to the S-containing material is 20-60 wt% : 40-80 wt%.

10. The method of claim 9, wherein the Na₂CO₃-containing material is Na₂CO₃ or trona (Na₂CO₃•NaHCO₃•2H₂O), and the S-containing material is at least any one of Na₂S, FeS, or Na₂SO₄.

11. The method of claim 6, wherein the flux is prepared in an amount of 150 kg to 4,000 kg per one ton of the molten iron.

12. The method of any one of claims 6 to 11, wherein
the flux has a specific gravity lower than that of the molten iron, and
the molten iron passes through the flux and sinks to the bottom of the flux.

13. The method of claim 6, wherein during the spraying of the molten iron prepared in the first container (210) to the second container (220) in the form of droplets, the interior of the second container (220) is in a vacuum state so that the molten iron introduced from the first container (210) is spread.

14. The method of claim 6, wherein during the spraying of the molten iron prepared in the first container (210) to the second container (220) in the form of droplets, pressure is applied to the interior of the first container (210) so that the molten iron in the first container (210) is sprayed to the second container (220) in the form of droplets.

15. The method of claim 6, wherein the desulfurizing flux comprises trona.

## Patentansprüche

1. Vorrichtung zur Behandlung einer Eisenschmelze, umfassend:
einen Schmelzofen, in dem eine Eisenquelle geschmolzen wird, um eine Eisenschmelze herzustellen; und
eine Entkupferungseinrichtung (200), die Folgendes umfasst: einen die Eisenschmelze aufnehmenden ersten Behälter (210), einen zweiten Behälter (220), der ein Flussmittel in ihm aufnimmt, das derart beschaffen ist, dass die Eisenschmelze damit reagiert, um das in der Eisenschmelze enthaltene Kupfer zu entfernen, und der unter dem ersten Behälter angeordnet ist; und
einen dritten Behälter (230), der unter dem zweiten Behälter (220) angeordnet ist und die Eisenschmelze aufnimmt, die aus dem zweiten Behälter (220) abgeleitet wurde,
wobei der erste Behälter (210) eine Sprüheinheit (214) aufweist, die an der Unterseite des ersten Behälters (210) angeordnet ist, um die Eisenschmelze in Form von Tröpfchen in den zweiten Behälter (220) zu sprühen, und wobei ein Auslass (223) zum Ableiten der Eisenschmelze an der Unterseite des zweiten Behälters (220) angeordnet ist.

2. Vorrichtung nach Anspruch 1, wobei der Schmelzofen wenigstens einer aus einem Elektroofen, einen Lichtbogen-Reduktionsofen (SAF, engl. submerged arc furnace) oder einem Pfannenofen (LF) ist.

3. Vorrichtung nach Anspruch 1 oder 2, wobei die Sprüheinheit (214) aus einer Vielzahl von Sprühlöchern (214a) oder einem porösen Element (214b) gebildet ist.

4. Vorrichtung nach Anspruch 3, wobei das Sprühloch (214a) eine Größe von 2 bis 5 mm aufweist.

5. Vorrichtung nach Anspruch 1 oder 2, umfassend eine Öffnungs- und Schließeinheit (215) zum Öffnen und Schließen der Sprüheinheit (214).

6. Verfahren zum Behandeln einer Eisenschmelze, wobei es sich um ein Verfahren zum Behandeln von in der Eisenschmelze enthaltenen Verunreinigungen handelt, wobei das Verfahren Folgendes umfasst:
Herstellen einer Eisenschmelze durch Schmelzen einer Eisenquelle, die Kupfer enthält;
Laden der Eisenschmelze in einen ersten Behälter (210);
Bereitstellen eines Flussmittels in einem zweiten Behälter (220), der unter dem ersten Behälter (210) angeordnet ist; und
Sprühen der in dem ersten Behälter (210) bereitgestellten Eisenschmelze in den zweiten Behälter (220) in Form von Tröpfchen und Bewirken, dass die Eisenschmelze mit dem Flussmittel reagiert, um das in der Eisenschmelze enthaltene Kupfer zu entfernen,
wobei die Entschwefelungsbehandlung Folgendes umfasst:
Bereitstellen eines dritten Behälters (230) unter dem zweiten Behälter (220);
Bereitstellen eines Entschwefelungsflussmittels in dem dritten Behälter (230); und
Zuführen der in dem zweiten Behälter (220) enthaltenen Eisenschmelze zum dritten Behälter (230) in Form eines Eisenschmelzestroms und Bewirken, dass die Eisenschmelze mit dem Flussmittel reagiert, um den in der Eisenschmelze enthaltenen Schwefel zu entfernen,
wobei die Entschwefelungsbehandlung im Anschluss an die Entfernung des Kupfers durchgeführt wird.

7. Verfahren nach Anspruch 6, wobei während der Herstellung der Eisenschmelze wenigstens eines aus Eisenschrott, Betonstahl, FINEX-Schlamm, Kupferschlacke, Altreifen (Reifencords) oder Eisensand als Eisenquelle verwendet wird.

8. Verfahren nach Anspruch 6, wobei das Flussmittel wenigstens ein Na₂CO₃-haltiges Material und ein S-haltiges Material umfasst.

9. Verfahren nach Anspruch 8, wobei das Mischungsverhältnis des Na₂CO₃-haltigen Materials zum S-haltigen Material 20 bis 60 Gew.-% zu 40 bis 80 Gew.-% beträgt.

10. Verfahren nach Anspruch 9, wobei das Na₂CO₃-haltige Material Na₂CO₃ oder Trona (Na₂CO₃•NaHCO₃•2H₂O) ist und das S-haltige Material wenigstens eines aus Na₂S, FeS oder Na₂SO₄ ist.

11. Verfahren nach Anspruch 6, wobei das Flussmittel in einer Menge von 150 kg bis 4.000 kg pro Tonne Eisenschmelze bereitgestellt wird.

12. Verfahren nach einem der Ansprüche 6 bis 11, wobei
das Flussmittel eine relative Dichte aufweist, die geringer als jene der Eisenschmelze ist, und
die Eisenschmelze durch das Flussmittel strömt und zum Boden des Flussmittels sinkt.

13. Verfahren nach Anspruch 6, wobei sich während des Sprühens der in dem ersten Behälter (210) bereitgestellten Eisenschmelze in den zweiten Behälter (220) in Form von Tröpfchen das Innere des zweiten Behälters (220) in einem Vakuumzustand befindet, so dass die aus dem ersten Behälter (210) eingeleitete Eisenschmelze verteilt wird.

14. Verfahren nach Anspruch 6, wobei während des Sprühens der in dem ersten Behälter (210) bereitgestellten Eisenschmelze in den zweiten Behälter (220) in Form von Tröpfchen Druck an das Innere des ersten Behälters (210) angelegt wird, so dass die Eisenschmelze im ersten Behälter (210) in Form von Tröpfchen in den zweiten Behälter (220) gesprüht wird.

15. Verfahren nach Anspruch 6, wobei das Entschwefelungsflussmittel Trona umfasst.

## Revendications

1. Appareillage pour le traitement de fer en fusion, comprenant :
un four de fusion qui fond une source de fer pour produire du fer en fusion et
un dispositif de décuivrage (200) comprenant une première cuve (210) qui reçoit le fer en fusion et une deuxième cuve (220) qui reçoit un fondant qui est configurée de telle manière que le fer en fusion réagisse avec pour éliminer le cuivre contenu dans le fer en fusion et qui est disposée sous la première cuve ; et
une troisième cuve (230) disposée sous la deuxième cuve (220) et recevant le fer en fusion qui sort de la deuxième cuve (220),
dans lequel la première cuve (210) comprend une unité de pulvérisation (214) disposée au fond de la première cuve (210) pour pulvériser le fer en fusion sous forme de gouttelettes vers la deuxième cuve (220), et une sortie (223) pour la sortie du fer en fusion est disposée au fond de la deuxième cuve (220).

2. Appareillage selon la revendication 1, dans lequel le four de fusion est au moins soit un four électrique, soit un four à arc submergé, soit un four-poche.

3. Appareillage selon la revendication 1 ou 2, dans lequel l'unité de pulvérisation (214) est formée d'un grand nombre de trous de pulvérisation (214a) ou d'un élément poreux (214b).

4. Appareillage selon la revendication 3, dans lequel le trou de pulvérisation (214a) a une taille de 2 à 5 mm.

5. Appareillage selon la revendication 1 ou 2, comprenant une unité d'ouverture et de fermeture (215) destinée à ouvrir et fermer l'unité de pulvérisation (214).

6. Procédé pour le traitement de fer en fusion, destiné à traiter les impuretés contenues dans le fer en fusion, lequel procédé comprend :
la production de fer en fusion par la fusion d'une source de fer contenant du cuivre ;
le chargement du fer en fusion dans une première cuve (210) ;
la préparation de fondant dans une deuxième cuve (220) disposée sous la première cuve (210) ;
et
la pulvérisation du fer en fusion préparé dans la première cuve (210) vers la deuxième cuve (220) sous forme de gouttelettes et la mise en réaction du fer en fusion avec le fondant pour éliminer le cuivre contenu dans le fer en fusion,
dans lequel le traitement de désulfuration comprend :
la préparation d'une troisième cuve (230) sous la deuxième cuve (220) ;
la préparation de fondant de désulfuration dans la troisième cuve (230) ; et
la fourniture du fer en fusion reçu dans la deuxième cuve (220) à la troisième cuve (230) sous la forme d'un écoulement de fer en fusion et la mise en réaction du fer en fusion avec le fondant pour éliminer le soufre contenu dans le fer en fusion,
le traitement de désulfuration étant exécuté à la suite de l'élimination du cuivre.

7. Procédé selon la revendication 6 dans lequel, au cours de la production du fer en fusion, au moins une matière parmi de la ferraille, des barres d'armature, du laitier FINEX, des scories de cuivre, des vieux pneus (câbles de pneu) ou de la limaille de fer est utilisée comme source de fer.

8. Procédé selon la revendication 6, dans lequel le fondant comprend au moins un matériau contenant du Na₂CO₃ et un matériau contenant du soufre.

9. Procédé selon la revendication 8, dans lequel le rapport de composition entre le matériau contenant du Na₂CO₃ et le matériau contenant du soufre est de 20 à 60 % du poids pour 40 à 80 % du poids.

10. Procédé selon la revendication 9, dans lequel le matériau contenant du Na₂CO₃ est du Na₂CO₃ ou du trona (Na₂CO₃•NaHCO₃•2H₂O), et le matériau contenant du soufre est au moins un des composés Na₂S, FeS ou Na₂SO₄.

11. Procédé selon la revendication 6, dans lequel le fondant est préparé dans une quantité de 150 kg à 4000 kg par tonne de fer en fusion.

12. Procédé selon l'une quelconque des revendications 6 à 11, dans lequel
le fondant a une gravité spécifique inférieure à celle du fer en fusion, et
le fer en fusion passe à travers le fondant et coule vers le fond du fondant.

13. Procédé selon la revendication 6 dans lequel, au cours de la pulvérisation du fer en fusion préparé dans la première cuve (210) vers la deuxième cuve (220) sous forme de gouttelettes, l'intérieur de la deuxième cuve (220) est dans une état sous vide de sorte que le fer en fusion introduit à partir de la première cuve (210) est dispersé.

14. Procédé selon la revendication 6 dans lequel, au cours de la pulvérisation du fer en fusion préparé dans la première cuve (210) vers la deuxième cuve (220) sous forme de gouttelettes, une pression est appliquée à l'intérieur de la première cuve (210) de sorte que le fer en fusion dans la première cuve (210) est pulvérisé vers la deuxième cuve (220) sous forme de gouttelettes.

15. Procédé selon la revendication 6, dans lequel le fondant de désulfuration contient du trona.
